# EUROPÄISCHE PATENTSCHRIFT

(11) **EP 3 487 707 B1**
(45) Veröffentlichungstag und Bekanntmachung des Hinweises auf die Patenterteilung: **11.03.2020**
(21) Anmeldenummer: 17746399.9
(22) Anmeldetag: 10.07.2017
(51) Int. Cl.: B41F 33/00, B41F 11/02

(54) **INSPEKTIONSSYSTEM MIT MEHREREN ERFASSUNGSBEREICHEN UND EINSTELLUNGSVERFAHREN**
INSPECTION SYSTEM HAVING A PLURALITY OF DETECTION REGIONS AND SETTING METHOD
SYSTÈME D'INSPECTION COMPORTANT PLUSIEURS ZONES DE DÉTECTION ET PROCÉDÉ DE RÉGLAGE

(30) Priorität: 19.07.2016 DE 102016213111
(43) Veröffentlichungstag der Anmeldung: 29.05.2019
(73) Patentinhaber: Koenig & Bauer AG, 97080 Würzburg (DE)
(72) Erfinder: ENGELHARDT, David, 49124 Georgsmarienhütte (DE); WILLEKE, Harald, 33102 Paderborn (DE)
(74) Vertreter: Koenig & Bauer AG
(86) Internationale Anmeldenummer: PCT/EP2017/067247
(87) Internationale Veröffentlichungsnummer: WO 2018/015193

(56) Entgegenhaltungen:
- EP-A1- 1 579 992
- DE-A1-102004 061 951
- US-A- 3 970 393

## Beschreibung

Die Erfindung betrifft eine Produktionsanlage mit einer Druckmaschine mit einem Inspektionssystem mit mehreren Erfassungsbereichen gemäß dem Oberbegriff des Anspruches 1 und ein Verfahren zum Einstellen einer messtechnischen Empfindlichkeit eines mehrere Erfassungsbereiche aufweisenden Inspektionssystems gemäß dem Anspruch 6.

Durch die DE 10 2004 014 547 A1, DE 10 2005 031 957 A1, DE 10 2005 054 122 A1 und EP 1 190 855 A1 sind jeweils Inspektionssysteme für Druckmaschinen bekannt.

Durch die DE 10 2004 061 951 A1 ist eine Einrichtung zur Qualitätskontrolle an Drucksachen, insbesondere gedruckter Bogen, bekannt, mit einer Einrichtung zur Aufnahme von Bilddaten der durch eine Bogen verarbeitende Maschine, beispielsweise einer Bogendruckmaschine, bewegten Drucksachen, einer der Aufnahmeeinrichtung nachgeschalteten Auswerteeinrichtung zur Verarbeitung der Bilddaten in Verbindung mit in einem mit der Auswerteeinrichtung verbundenem Speicher abgelegten Daten, wobei durch die Aufnahmeeinrichtung eine die zu inspizierenden Bereiche wiedergebende Drucksache abtastbar und in der Auswerteeinrichtung daraus die zu inspizierenden

Bereiche bzw. deren Bildinhalte kennzeichnende Daten ermittelbar, im Speicher ablegbar und bei der anschließenden Auswertung von Bilddaten von verarbeiteten oder zu verarbeitenden Drucksachen verwertbar sind, wobei vorgesehen ist, dass in der Auswerteeinrichtung durch entsprechende Schwellwertvorgaben bezüglich Helligkeit und/oder Farbton und/oder Sättigung eine Separation der in einer spezieller Farbe eingefärbten und zu inspizierenden Bildbereichen von nicht zu inspizierenden Bildbereichen erfolgt. Somit offenbart die DE 10 2004 061 951 A1 ein Inspektionssystem und eine Einstellungsverfahren gemäß dem Oberbegriff der Ansprüche 1 und 6.

Durch die EP 0 749 833 A2 sind eine Farbsensoranordnung auf Video-Basis für das Regelungssystem einer Druckmaschine und ein Verfahren zu deren Verwendung bekannt, wobei zur gemeinsamen Inspektion eines Druckbogens sowohl eine im sichtbaren Bereich des elektromagnetischen Spektrums messende Farbkamera als auch eine im nicht sichtbaren Infrarotbereich messende Schwarz-Weiß-Kamera vorgesehen sind.

Durch die DE 10 2005 018 855 A1 ist eine Vorrichtung zur Inspektion insbesondere von mit einer Druckmaschine hergestellten Druckerzeugnissen bekannt, wobei eine erste Kamera z. B. mit einem Normalobjektiv vorgesehen ist, welche auf ein am Druckerzeugnis zu überprüfendes Inspektionsfeld gerichtet ist, wobei mindestens eine weitere Kamera z. B. mit einem Teleobjektiv vorgesehen ist, welche zumindest abschnittsweise auf dasselbe, bereits von der ersten Kamera überwachte Inspektionsfeld gerichtet ist, wobei die erste Kamera von einem Inspektionsfeld ein Übersichtsbild und die zweite Kamera in dem Inspektionsfeld ein Detailbild mit erhöhter Ortsauflösung aufnimmt.

Durch die US 5,912,988 A ist ein Bildauswerteverfahren bekannt, bei dem ein Gesamtbild in mehrere einzelne Bereiche aufgeteilt wird, wobei jeder Bereich einzeln auswertbar ist.

Bei der Herstellung von in einer Produktionsanlage mit einer Druckmaschine produzierten Druckerzeugnissen ist es üblich, während des diese Druckerzeugnisse produzierenden Produktionsprozesses drucktechnische Eigenschaften dieser Druckerzeugnisse insbesondere fortlaufend, aber zumindest sporadisch, d. h. stichprobenmäßig zu prüfen, um eine möglichst hohe Produktionsqualität zu gewährleisten. Die die Produktionsqualität beeinflussenden zu prüfenden Eigenschaften des betreffenden Druckerzeugnisses sind z. B. eine Farbdichte und/oder ein Farbwert und/oder eine Schärfe, insbesondere Kantenschärfe eines auf einem Bedruckstoff aufgebrachten Druckbildes. Zur Durchführung der jeweiligen Prüfung werden häufig Inspektionssysteme eingesetzt, die vorzugsweise über mindestens eine optoelektronische Kamera verfügen, wobei die betreffende Kamera mindestens ein Druckbild des betreffenden Druckerzeugnisses zumindest teilweise fotografisch abbildet und aus der Abbildung vorzugsweise digitale Bilddaten erzeugt, die einer insbesondere elektronischen Auswerteeinheit zur Verfügung gestellt werden. Die Auswerteeinheit analysiert dann die erhaltenden Bilddaten hinsichtlich der zu prüfenden Eigenschaften des betreffenden Druckerzeugnisses und bewertet i. d. R. das jeweilige Prüfungsergebnis, indem die Auswerteeinheit in Abhängigkeit vom jeweiligen Prüfungsergebnis signalisiert, ob das geprüfte Exemplar des Druckerzeugnisses der geforderten, z. B. durch Schrankenwerte zuvor festgelegten Produktionsqualität genügt oder nicht. Gegebenenfalls gibt die Auswerteeinheit mindestens ein Signal aus, z. B. ein Steuersignal an ein an der Produktion beteiligtes Aggregat der Produktionsanlage oder Druckmaschine, um bei einer festgestellten unzureichenden Produktionsqualität dieses Defizit bei nachfolgend produzierten Druckerzeugnissen zu beheben und/oder um mit einem Mangel behaftete Druckerzeugnisse aus dem Produktionsfluss auszuschleusen.

Insbesondere im Wertdruck, d. h. bei der Herstellung von Banknoten oder anderen Wertdokumenten, aber auch bei der Herstellung z. B. von hochwertigen Verpackungen werden im Produktionsprozess mehrere voneinander verschiedene Druckverfahren verwendet. Beispielsweise können bei der Herstellung von Banknoten ein Stahlstichdruckverfahren und/oder ein Offsetdruckverfahren und/oder ein Siebdruckverfahren und/oder ein druckformloses Druckverfahren, d. h. ein Digitaldruckverfahren, z. B. ein Inkjetdruckverfahren und/oder ein Laserdruckverfahren zum Einsatz gebracht werden. Die verschiedenen Druckverfahren erzeugen Druckbilder mit sich voneinander unterscheidenden drucktechnischen Eigenschaften, weshalb bei einer Prüfung von Druckerzeugnissen mit unterschiedlich produzierten Druckbildern in einem zur Prüfung verwendeten Inspektionssystem jeweils Anpassungen erforderlich sind. Es besteht das Bedürfnis, für im Produktionsprozess durch mehrere voneinander verschiedene Druckverfahren hergestellte Druckerzeugnisse ein Inspektionssystem bereit zu stellen, welches in der Lage ist, in oder an durch voneinander verschiedene Druckverfahren gedruckten Druckbildern des betreffenden Druckerzeugnisses jeweils mindestens eine von deren Eigenschaften zu prüfen.

Der Erfindung liegt die Aufgabe zugrunde, eine Produktionsanlage mit einer Druckmaschine mit einem Inspektionssystem mit mehreren Erfassungsbereichen und ein Verfahren zum Einstellen einer messtechnischen Empfindlichkeit eines mehrere Erfassungsbereiche aufweisenden Inspektionssystems zu schaffen, bei denen verschiedene Erfassungsbereiche mit einer unterschiedlichen Empfindlichkeit inspiziert werden.

Die Aufgabe wird erfindungsgemäß durch die Merkmale der Ansprüche 1 und 6 gelöst.

Die abhängigen Ansprüche betreffen jeweils vorteilhafte Ausgestaltungen und/oder Weiterbildungen der gefundenen Lösung.

Die mit der Erfindung erzielbaren Vorteile bestehen insbesondere darin, dass verschiedene Bereiche eines Druckbogens, auf denen Druckbilder jeweils in unterschiedlichen Druckverfahren ausgebildet werden, mit einer unterschiedlichen Empfindlichkeit inspiziert werden können, was zu einer sachgerechteren Auswertung und zu einer ausgewogeneren Beurteilung der Qualität eines in einer Produktionsanlage mit einer Druckmaschine produzierten Druckerzeugnisses führt, da z. B. Toleranzen im Inspektionssystem in Abhängigkeit von dem für einen bestimmten Bereich verwendeten Druckverfahren eingestellt werden können. Darüber hinaus wird es durch die vorgeschlagene Lösung möglich, eine statistische Auswertung hinsichtlich der ermittelten Qualität des Druckerzeugnisses bereichsweise je nach verwendetem Druckverfahren vorzunehmen. Es wird möglich, für die einzelnen jeweils in unterschiedlichen Druckverfahren bedruckten Druckbereiche individuelle Fehlerhäufigkeiten festzustellen, was die Grundlage für eine sachgerechtere Steuerung der Druckmaschine sein kann.

Ein Ausführungsbeispiel der Erfindung ist in den Zeichnungen dargestellt und wird im Folgenden näher beschrieben.

Es zeigen:
- Fig. 1: einen Druckbogen mit mehreren Druckerzeugnissen mit jeweils mehreren bedruckten oder zu bedruckenden Bereichen;
- Fig. 2: ein Inspektionssystem mit mehreren Erfassungsbereichen.

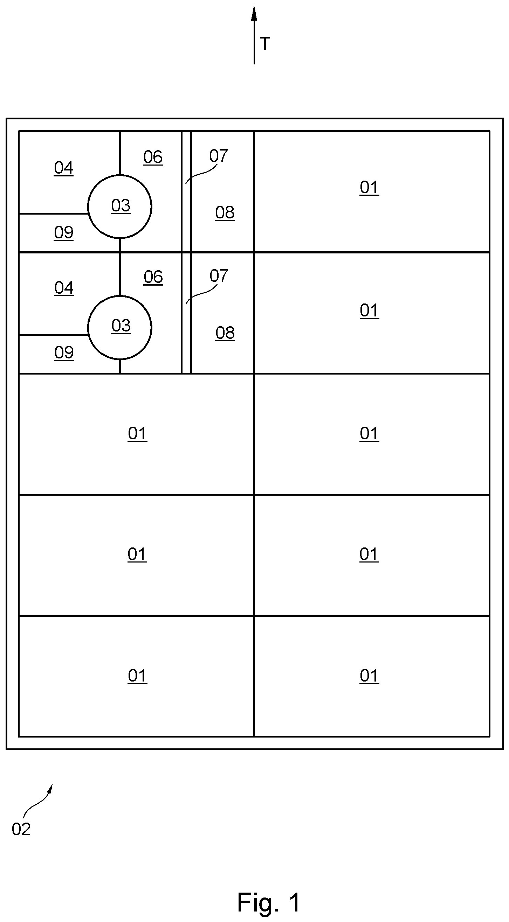

Das Ausführungsbeispiel ist dem Bereich des Wertdrucks entnommen und bezieht sich beispielhaft auf die Herstellung von Banknoten 01. Jeweils als eine Banknote 01 ausgebildete oder auszubildende Druckerzeugnisse werden in einer mindestens eine Druckmaschine aufweisenden Produktionsanlage üblicherweise in Nutzentechnik auf einem Bedruckstoff produziert, wobei es sich bei dem Bedruckstoff zumeist um Druckbogen 02 handelt, d. h. es werden jeweils mehrere i. d. R. identische Banknoten 01 auf jedem in einem bestimmten Produktionsprozess zu bedruckenden Druckbogen 02 vorzugsweise in Spalten und Zeilen angeordnet, wie es in der Fig. 1 stark vereinfacht beispielhaft dargestellt ist. An der Herstellung von Banknoten 01 sind üblicherweise mehrere voneinander verschiedene Druckverfahren beteiligt, z. B. ein Stahlstichdruckverfahren und/oder ein Offsetdruckverfahren und/oder ein Siebdruckverfahren und/oder ein druckformloses Druckverfahren, d. h. ein Digitaldruckverfahren, z. B. ein Inkjetdruckverfahren und/oder ein Laserdruckverfahren. Zumeist wird in einem bestimmten Produktionsprozess eine Sequenz von mehreren dieser derart zu bedruckenden Druckbogen 02 z. B. in einer in der Fig. 1 durch einen Richtungspfeil angedeuteten Transportrichtung T durch die Produktionsanlage bzw. die Druckmaschine geführt, wobei diese Druckbogen 02 auf ihrem jeweiligen Transportweg durch diese Produktionsanlage bzw. Druckmaschine i. d. R. nacheinander jeweils mit verschiedenen Druckverfahren bedruckt werden. Derartige i. d. R. in einem rechteckförmigen Format ausgebildete Banknoten 01 weisen demnach jeweils mehrere bedruckte oder zumindest zu bedruckende Bereiche 03; 04; 06; 07; 08; 09 auf, wobei in mindestens zwei von diesen Bereichen 03; 04; 06; 07; 08; 09 das dort jeweils anzuordnende Druckbild durch Anwendung voneinander verschiedener Druckverfahren auf dem jeweiligen insbesondere aus Papier bestehenden Druckbogen 02 ausgebildet wird bzw. ist. Verschiedene Bereiche 03; 04; 06; 07; 08; 09 einer derart produzierten Banknote 01 unterscheiden sich z. B. dadurch, dass in einem Bereich 03 mit einem in einem Stahlstichdruckverfahren erzeugten Druckbild dieses Druckbild z. B. filigraner und/oder konturenschärfer ausgebildet ist als ein Druckbild in einem Bereich 04; 06; 07; 08; 09, der ein in einem Offsetdruckverfahren oder in einem Siebdruckverfahren erzeugtes Druckbild aufweist.

Um eine möglichst hohe Produktionsqualität zu gewährleisten, ist vorgesehen, zumindest einen Teil der in einem bestimmten Produktionsprozess gedruckten Druckbilder mit einem Inspektionssystem hinsichtlich gewisser drucktechnischer, die Qualität des betreffenden Druckerzeugnisses beeinflussender Eigenschaften zu prüfen, wie z. B. eine Farbdichte und/oder einen Farbwert und/oder eine Schärfe, insbesondere eine Kantenschärfe der betreffenden Druckbilder. Mit Schärfe ist eine Unterscheidbarkeit von Details in einem Druckbild gemeint und als Zählmaß wird z. B. eine Menge von noch voneinander unterscheidbaren Linien ermittelt. Eine Kantenschärfe ist umso höher, desto abrupter in einer fotografischen Abbildung eines Druckbildes ein Übergang von Dunkel zu Hell ist. Um zu einer ausgewogenen Beurteilung der produzierten Qualität zu gelangen, werden die in verschiedenen Bereichen 03; 04; 06; 07; 08; 09 des betreffenden Druckerzeugnisses mit voneinander verschiedenen Druckverfahren erzeugten Druckbilder erfindungsgemäß unterschiedlich sensibel inspiziert, was bedeutet, dass im Inspektionssystem für die verschiedenen zu inspizierenden Bereichen 03; 04; 06; 07; 08; 09 des betreffenden Druckerzeugnisses jeweils eine unterschiedliche messtechnische Empfindlichkeit eingestellt ist. Der Begriff der Empfindlichkeit ist in der Messtechnik gemäß DIN 1319 definiert als die "Änderung des Wertes der Ausgangsgröße eines Messgerätes bezogen auf die sie verursachende Änderung des Wertes der Eingangsgröße". Eine messtechnische Empfindlichkeit beschreibt somit einen Zusammenhang zwischen einer zu messenden Größe, z. B. einer Farbdichte oder einem Farbwert oder einer Schärfe, und einem mit der jeweiligen zu messenden Größe korrespondierenden Messsignal, z. B. einer elektrischen Spannung, insbesondere einem z. B. an einer Skala angezeigten Messwert. Ein Messverfahren wird als empfindlich bezeichnet, wenn eine kleine Änderung der zu messenden Größe eine große Änderung des Messsignals zur Folge hat.

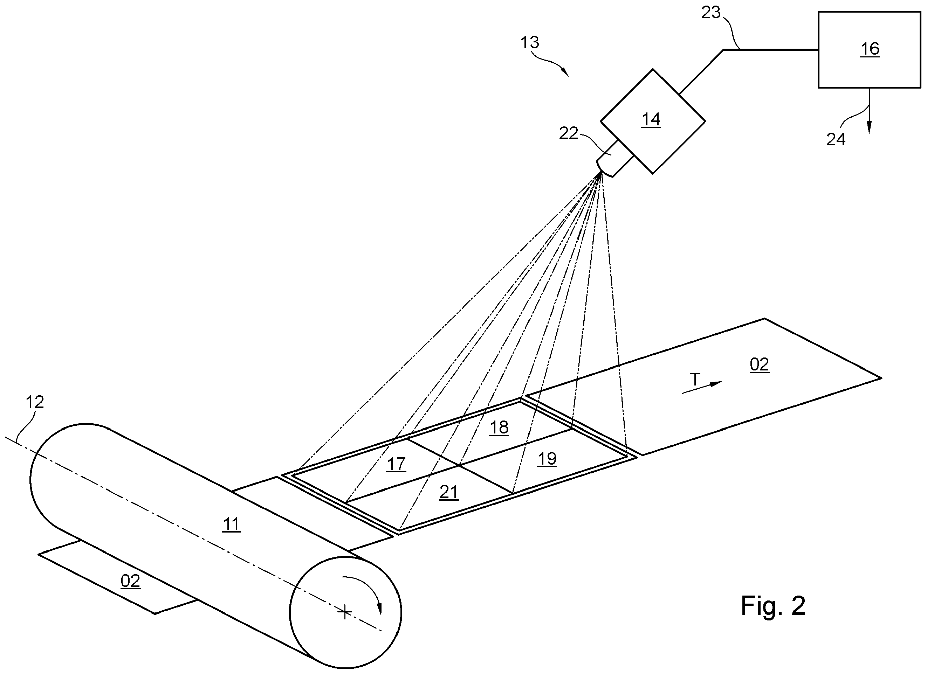

Fig. 2 zeigt stark vereinfacht eine Sequenz von mehreren nacheinander durch eine Produktionsanlage mit einer Druckmaschine geführte und dort durch mindestens ein Druckwerk bedruckte Druckbogen 02, wobei das mindestens eine in der Fig. 2 beispielhaft angedeutete Druckwerk z. B. mindestens einen jeweils um eine Rotationsachse 12 rotierenden Druckzylinder 11 aufweist. Mindestens eines der Druckwerke bringt auf jeden der Druckbogen 02 mindestens ein Druckbild jeweils in einem Stahlstichdruckverfahren auf. Darüber hinaus werden auf den durch die Produktionsanlage geführten Druckbogen 02 auf ihrem Transportweg jeweils nacheinander noch mindestens ein weiteres Druckbild mittels eines anderen Druckverfahrens aufgebracht, in einem Offsetdruckverfahren und/oder in einem Siebdruckverfahren und/oder in einem druckformlosen Druckverfahren. Vorzugsweise am Ende des Transportweges der durch die Produktionsanlage geführten Druckbogen 02 ist ein Inspektionssystem 13 vorzugsweise mit mindestens einer Kamera 14 angeordnet, wobei die mindestens eine Kamera 14 ihre jeweiligen vorzugsweise digitalen Bilddaten an eine insbesondere elektronische Auswerteeinheit 16 zur Analyse und Auswertung dieser Bilddaten leitet. Das Inspektionssystem 13, insbesondere dessen mindestens eine Kamera 14 ist derart ausgebildet, dass es mehrere unabhängig voneinander in ihrer jeweiligen Empfindlichkeit einstellbare Erfassungsbereiche 17; 18; 19; 21 aufweist.

In einer bevorzugten Ausführung bedeutet dies, dass ein in einer Produktionsanlage mit einer Druckmaschine oder in oder an einem Messtisch angeordnetes Inspektionssystem 13 jeweils vorzugsweise derart ausgebildet ist, einen Druckbogen 02 oder ein einzelnes Druckerzeugnis, z. B. eine Banknote 01 jeweils vollständig, zumindest aber einen Teil eines Druckbildes fotografisch abzubilden. Dabei weist das Inspektionssystem 13 mehrere Erfassungsbereiche 17; 18; 19; 21 auf, wobei mehrere dieser Erfassungsbereiche 17; 18; 19; 21 des Inspektionssystems 13 jeweils einen mehrere bedruckte Bereiche 03; 04; 06; 07; 08; 09 aufweisenden Druckbogen 02 gemeinsam inspizierend angeordnet sind. Die gemeinsame, z. B. auch gleichzeitige Inspektion von mehreren bedruckten Bereichen 03; 04; 06; 07; 08; 09 eines Druckbogens 02 wird durch eine entsprechende Anordnung und/oder Ausbildung der Erfassungsbereiche 17; 18; 19; 21 des Inspektionssystems 13 ermöglicht, indem z. B. entsprechende Objektive 22 oder andere optische Einrichtungen in Verbindung mit der mindestens einen Kamera 14 des Inspektionssystems 13 zum Einsatz gebracht werden. Die mindestens eine Kamera 14 des Inspektionssystems 13 ist vorzugsweise jeweils als eine optoelektronische Kamera 14 ausgebildet, wobei die betreffende Kamera 14 bei der fotografischen Abbildung des mindestens einen Druckbildes vorzugsweise digitale Bilddaten erzeugt. Diese Bilddaten werden via einer drahtgebundenen oder drahtlosen Datenverbindung 23 einer insbesondere elektronischen Auswerteeinheit 16 zur Verfügung gestellt. Die Auswerteeinheit 16 analysiert dann die aus der Erfassung des betreffenden Druckbogens 02 oder mindestens einen Druckbildes generierten, von mindestens zwei voneinander verschiedenen Erfassungsbereichen 17; 18; 19; 21, deren jeweilige messtechnische Empfindlichkeit voneinander verschieden eingestellt sind, erhaltenden Bilddaten hinsichtlich der zu prüfenden Eigenschaften des betreffenden Druckerzeugnisses und bewertet i. d. R. das jeweilige Prüfungsergebnis, indem die Auswerteeinheit 16 in Abhängigkeit vom jeweiligen Prüfungsergebnis signalisiert, ob das geprüfte Exemplar des Druckerzeugnisses in den jeweiligen Erfassungsbereichen 17; 18; 19; 21 jeweils der geforderten, z. B. durch Schrankenwerte zuvor festgelegten Produktionsqualität genügt oder nicht. Gegebenenfalls gibt die Auswerteeinheit 16 mindestens ein Signal 24 aus, z. B. ein Steuersignal an ein an der Produktion beteiligtes Aggregat der Produktionsanlage oder Druckmaschine, z. B. an ein Farbwerk und/oder Feuchtwerk und/oder an eine Registerregeleinrichtung, insbesondere an eine Farbregisterregeleinrichtung, um bei einer festgestellten unzureichenden Produktionsqualität dieses Defizit bei nachfolgend produzierten Druckerzeugnissen zu beheben und/oder um mit einem Mangel behaftete Druckerzeugnisse aus dem Produktionsfluss auszuschleusen. Die mit dem Inspektionssystem 13 ausgeführte Prüfung von in einem bestimmten Produktionsprozess gedruckten Druckerzeugnissen erfolgt insbesondere fortlaufend, aber zumindest sporadisch, d. h. stichprobenmäßig.

Erfindungsgemäß sind bei dem betreffenden Inspektionssystem 13 ein erster Erfassungsbereich 17 einen ersten bedruckten Bereich des Druckbogens 02 und ein zweiter Erfassungsbereich 18 einen zweiten bedruckten Bereich desselben Druckbogens 02 inspizierend angeordnet, wobei in dem Inspektionssystem 13 für den ersten Erfassungsbereich 17 eine erste messtechnische Empfindlichkeit und für den zweiten Erfassungsbereich 18 eine zweite messtechnische Empfindlichkeit eingestellt sind, wobei die erste messtechnische Empfindlichkeit und die zweite messtechnische Empfindlichkeit sich voneinander unterscheidend eingestellt sind. In einer bevorzugten Ausführung ist für den ersten den ersten bedruckten Bereich des Druckbogens 02 inspizierenden Erfassungsbereich 17 eine gegenüber dem zweiten den zweiten bedruckten Bereich des Druckbogens 02 inspizierenden Erfassungsbereich 18 höhere messtechnische Empfindlichkeit eingestellt. Dabei sind die erste messtechnische Empfindlichkeit und die zweite messtechnische Empfindlichkeit jeweils manuell mittels eines Bedienelements oder automatisch durch ein Programm eingestellt.

An dem zuvor beschriebenen mehrere Erfassungsbereiche 17; 18; 19; 21 aufweisenden Inspektionssystem 13 ist ein Verfahren zum Einstellen einer messtechnischen Empfindlichkeit ausführbar, bei dem mit mehreren dieser Erfassungsbereiche 17; 18; 19; 21 ein mehrere zu bedruckende Bereiche aufweisender Druckbogen 02 gemeinsam inspiziert wird, bei dem mindestens zwei dieser Bereiche des Druckbogens 02 vor ihrer jeweiligen Inspektion bedruckt werden. Erfindungsgemäß wird der erste zu inspizierende Bereich des Druckbogens 02 in einem Stahlstichverfahren bedruckt und der zweite zu inspizierende Bereich des Druckbogens 02 wird in einem Offsetdruckverfahren oder in einem Siebdruckverfahren oder in einem druckformlosen Druckverfahren bedruckt. Mit einem ersten Erfassungsbereich 17 des Inspektionssystems 13 wird ein erster bedruckter Bereich des Druckbogens 02 und mit einem zweiten Erfassungsbereich 18 dieses Inspektionssystems 13 wird ein zweiter bedruckter Bereich desselben Druckbogens 02 inspiziert. Ferner werden in oder an dem Inspektionssystem 13 für den ersten Erfassungsbereich 17 eine erste messtechnische Empfindlichkeit und für den zweiten Erfassungsbereich 18 eine zweite messtechnische Empfindlichkeit eingestellt, wobei die erste messtechnische Empfindlichkeit und die zweite messtechnische Empfindlichkeit derart eingestellt werden, dass sie sich voneinander unterscheiden.

Es wird in einer Einrichtephase der Produktionsanlage oder der Druckmaschine oder des Messtisches als Druckbogen 02 jeweils ein von einem zur Erzeugung eines Endprodukts verwendeten Produktionsbogen abweichender Vorlaufbogen verwendet, bei dem der in dem Stahlstichverfahren bedruckte Bereich des Vorlaufbogens von einem der Erfassungsbereiche 17 des Inspektionssystems 13 erfasst und dieser Erfassungsbereich 17 in dem Inspektionssystem 13 als dessen erster Erfassungsbereich 17 für die Inspektion von mindestens einem ersten auf einem nachfolgend zur Erzeugung des Endprodukts verwendeten Produktionsbogen in dem Stahlstichverfahren bedruckten Bereich festgelegt wird. Dabei wird der in der Einrichtephase der Produktionsanlage oder der Druckmaschine oder des Messtisches in dem Stahlstichverfahren bedruckte Bereich des Vorlaufbogens ohne Wischung bedruckt. Eine Wischung wird z. B. mittels einer Rakel und eines Wischzylinders ausgeführt. Ohne Wischung zu drucken bedeutet, dass die Gravur in der Stahlstichdruckplatte mit Druckfarbe gefüllt bleibt und zu viel aufgetragene Druckfarbe nicht entfernt wird. Auch werden auf dem Vorlaufbogen i. d. R. keine Bereiche in einem Offsetdruckverfahren oder in einem Druckverfahren außer dem Stahlstichdruckverfahren bedruckt. Es kann vorgesehen sein, dass in dem ersten in dem Stahlstichverfahren bedruckten Bereich des betreffenden Druckbogens 02 z. B. aufgrund eines Auftrags von zu viel Druckfarbe mindestens ein Teilbereich zumindest in seiner Kontur unscharf ausgebildet wird. In diesem Fall wird die mindestens eine unscharfe Kontur nach ihrer Erfassung z. B. durch mindestens eine im Inspektionssystem 13 verwendete Bildoperation jeweils als eine scharfe Kontur ausgebildet, wobei die Bildoperation z. B. in einer morphologischen Funktion besteht. Beispielsweise besteht die Bildoperation darin, dass eine Binarisierung und/oder ein Closing und/oder eine Dilatation und/oder eine Erosion ausgeführt wird. Durch eine Binarisierung sind in der fotografischen Abbildung z. B. auch bedruckte von unbedruckten Bereichen des betreffenden Druckbogens 02 trennbar. Ein unbedruckter Bereich des Druckbogens 02 zeigt z. B. nur dessen Papierweiß.

### Bezugszeichenliste

- 01: Banknote
- 02: Druckbogen
- 03: Bereich
- 04: Bereich
- 05: -
- 06: Bereich
- 07: Bereich
- 08: Bereich
- 09: Bereich
- 10: -
- 11: Druckzylinder
- 12: Rotationsachse
- 13: Inspektionssystem
- 14: Kamera
- 15: -
- 16: Auswerteeinheit
- 17: Erfassungsbereich
- 18: Erfassungsbereich
- 19: Erfassungsbereich
- 20: -
- 21: Erfassungsbereich
- 22: Objektiv
- 23: Datenverbindung
- 24: Signal

- T: Transportrichtung

## Patentansprüche

1. Produktionsanlage mit einer Druckmaschine mit einem Inspektionssystem (13) mit mehreren Erfassungsbereichen (17; 18; 19; 21), wobei mehrere dieser Erfassungsbereiche (17; 18; 19; 21) des Inspektionssystems (13) einen mehrere bedruckte Bereiche aufweisenden Druckbogen (02) gemeinsam inspizierend angeordnet sind, wobei ein erster Erfassungsbereich (17) einen ersten bedruckten Bereich des Druckbogens (02) und ein zweiter Erfassungsbereich (18) einen zweiten bedruckten Bereich desselben Druckbogens (02) inspizierend angeordnet sind, wobei in dem Inspektionssystem (13) für den ersten Erfassungsbereich (17) eine erste messtechnische Empfindlichkeit und für den zweiten Erfassungsbereich (18) eine zweite messtechnische Empfindlichkeit eingestellt sind, wobei die erste messtechnische Empfindlichkeit und die zweite messtechnische Empfindlichkeit sich voneinander unterscheidend eingestellt sind, wobei die erste messtechnische Empfindlichkeit und die zweite messtechnische Empfindlichkeit jeweils manuell mittels eines Bedienelements oder automatisch durch ein Programm eingestellt sind, wobei die Druckmaschine der Produktionsanlage mehrere Druckwerke aufweist, wobei mindestens zwei dieser Druckwerke einen selben Druckbogen bedruckend angeordnet sind, **dadurch gekennzeichnet, dass** von diesen denselben Druckbogen (02) bedruckenden Druckwerken eines als ein den betreffenden Druckbogen in einem Stahlstichdruckverfahren bedruckendes Druckwerk und ein anderes Druckwerk als ein den betreffenden Druckbogen (02) in einem Offsetdruckverfahren oder in einem Siebdruckverfahren oder in einem druckformlosen Druckverfahren bedruckendes Druckwerk ausgebildet sind, wobei ein in dem Stahlstichverfahren ohne Wischung bedruckter Bereich eines in einer Einrichtephase der Druckmaschine verwendeten Vorlaufbogens von einem der Erfassungsbereiche (17) des Inspektionssystems (13) erfasst und in dem Inspektionssystem (13) als dessen erster Erfassungsbereich (17) für die Inspektion von mindestens einem ersten auf einem nachfolgend zur Erzeugung des Endprodukts verwendeten Produktionsbogen in dem Stahlstichverfahren bedruckten Bereich festgelegt ist.

2. Produktionsanlage nach Anspruch 1, **dadurch gekennzeichnet, dass** für den ersten den ersten bedruckten Bereich des Druckbogens (02) inspizierenden Erfassungsbereich (17) eine gegenüber dem zweiten den zweiten bedruckten Bereich des Druckbogens (02) inspizierenden Erfassungsbereich (18) höhere messtechnische Empfindlichkeit eingestellt ist.

3. Produktionsanlage nach Anspruch 1 oder 2, **dadurch gekennzeichnet, dass** eine den Druckbogen (02) erfassende Kamera (14) vorgesehen ist, wobei die Kamera (14) mit einer Auswerteeinheit (16) verbunden ist, wobei die Kamera (14) aus der Erfassung des Druckbogens (02) generierte digitale Bilddaten an die Auswerteeinheit (16) leitet, wobei die Auswerteeinheit (16) diese Bilddaten in mindestens zwei voneinander verschiedenen Erfassungsbereichen (17; 18; 19; 21), deren jeweilige messtechnische Empfindlichkeit voneinander verschieden eingestellt sind, analysiert und auswertet.

4. Produktionsanlage nach Anspruch 1 oder 2 oder 3, **dadurch gekennzeichnet, dass** die jeweilige messtechnische Empfindlichkeit jeweils als ein Zusammenhang zwischen einer zu messenden Größe und einem mit der jeweiligen zu messenden Größe korrespondierenden Messsignal ausgebildet ist, wobei die zu messende Größe eine Farbdichte oder ein Farbwert oder eine Schärfe und das mit der jeweiligen zu messenden Größe korrespondierende Messsignal ein an einer Skala angezeigter Messwert oder eine elektrische Spannung ist.

5. Produktionsanlage nach Anspruch 1 oder 2 oder 3 oder 4, **dadurch gekennzeichnet, dass** das Inspektionssystem (13) am Ende des Transportweges der betreffenden durch die Produktionsanlage geführten Druckbogen (02) angeordnet ist.

6. Verfahren zum Einstellen einer messtechnischen Empfindlichkeit eines mehrere Erfassungsbereiche aufweisenden Inspektionssystems, wobei dieses Verfahren in einer Produktionsanlage mit einer Druckmaschine oder an einem Messtisch ausgeführt wird, bei dem mit mehreren der Erfassungsbereiche (17; 18; 19; 21) ein mehrere zu bedruckende Bereiche aufweisender Druckbogen (02) gemeinsam inspiziert wird, bei dem mindestens zwei dieser Bereiche des Druckbogens (02) vor ihrer jeweiligen Inspektion bedruckt werden, bei dem mit einem ersten Erfassungsbereich (17) des Inspektionssystems (13) ein erster bedruckter Bereich des Druckbogens (02) und mit einem zweiten Erfassungsbereich (18) dieses Inspektionssystems (13) ein zweiter bedruckter Bereich desselben Druckbogens (02) inspiziert werden, bei dem in oder an dem Inspektionssystem (13) für den ersten Erfassungsbereich (17) eine erste messtechnische Empfindlichkeit und für den zweiten Erfassungsbereich (18) eine zweite messtechnische Empfindlichkeit eingestellt werden, wobei die erste messtechnische Empfindlichkeit und die zweite messtechnische Empfindlichkeit derart eingestellt werden, dass sie sich voneinander unterscheiden, wobei die erste messtechnische Empfindlichkeit und die zweite messtechnische Empfindlichkeit jeweils manuell mittels eines Bedienelements oder automatisch durch ein Programm eingestellt werden, bei dem jeweils in einer Einrichtephase der Produktionsanlage oder des Messtisches als Druckbogen (02) ein von einem zur Erzeugung eines Endprodukts verwendeten Produktionsbogen abweichender Vorlaufbogen verwendet wird, **dadurch gekennzeichnet, dass** der erste zu inspizierende Bereich des Druckbogens (02) in einem Stahlstichverfahren bedruckt wird und dass der zweite zu inspizierende Bereich des Druckbogens (02) in einem Offsetdruckverfahren oder in einem Siebdruckverfahren oder in einem druckformlosen Druckverfahren bedruckt wird, wobei der in der Einrichtephase der Produktionsanlage in dem Stahlstichverfahren bedruckte Bereich des Vorlaufbogens ohne Wischung bedruckt wird, bei dem der in dem Stahlstichverfahren bedruckte Bereich des Vorlaufbogens von einem der Erfassungsbereiche (17) des Inspektionssystems (13) erfasst und dieser Erfassungsbereich (17) in dem Inspektionssystem (13) als dessen erster Erfassungsbereich (17) für die Inspektion von mindestens einem ersten auf einem nachfolgend zur Erzeugung des Endprodukts verwendeten Produktionsbogen in dem Stahlstichverfahren bedruckten Bereich festgelegt wird.

7. Verfahren nach Anspruch 6, **dadurch gekennzeichnet, dass** in dem ersten in dem Stahlstichverfahren bedruckten Bereich des betreffenden Druckbogens (02) mindestens ein Teilbereich zumindest in seiner Kontur unscharf ausgebildet wird.

8. Verfahren nach Anspruch 7, **dadurch gekennzeichnet, dass** die mindestens eine unscharfe Kontur nach ihrer Erfassung durch mindestens eine im Inspektionssystem (13) verwendete Bildoperation jeweils als eine scharfe Kontur ausgebildet wird.

## Claims

1. A production facility with a printing press having an inspection system (13) with a plurality of detection regions (17; 18; 19; 21), wherein the plurality of said detection regions (17; 18; 19; 21) of the inspection system (13) are arranged so as to jointly inspect a printed sheet (02) which has a plurality of printed regions, wherein a first detection region (17) is arranged so as to inspect a first printed region of the printed sheet (02), and a second detection region (18) is arranged so as to inspect a second printed region of the same printed sheet (02), wherein a first measuring technology sensitivity is set for the first detection region (17) and a second measurement technology sensitivity is set for the second detection region (18) in the inspection system (13), wherein the first measurement technology sensitivity and the second measurement technology sensitivity are set so as to be different from one another, wherein the first measurement technology sensitivity and the second measurement technology sensitivity are set in each case manually by means of an operating element or automatically by way of a program, wherein the printing press of the production facility has a plurality of printing units, wherein at least two of these printing units are arranged so as to print a same printed sheet, **characterized in that** of these printing units printing these same printed sheets (02) one is configured as a printing unit printing the relevant printed sheet in a steel table printing process and another printing unit is configured as a printing unit printing the relevant printed sheet (02) in an offset printing process or in a screen printing process or in a printing process without printing forms, wherein a region printed in the steel table printing process without wiping of an advance sheet used in the set-up phase of the printing press is detected by one of the detection regions (17) of the inspection system (13) and in the inspection system (13) is defined as its first detection region (17) for the inspection of at least one first printed region on a production sheet used subsequently to produce the end product in the steel table printing process.

2. The production facility according to claim 1, **characterized in that** for the first detection region (17) inspecting the first printed region of the printed sheet (02) a higher measuring technology sensitivity is set compared to second detection region (18) inspecting the second printed region of the printed sheet (02).

3. The production facility according to claim 1 or 2, **characterized in that** a camera (14) detecting the printed sheet (02) is provided, wherein the camera (14) is connected to an evaluation unit (16), wherein the camera (14) directs digital image data generated from the detection of the printed sheet (02) to the evaluation unit (16), wherein the evaluation unit (16) analyzes and evaluates these image data in at least two detection regions (17; 18; 19; 21) different from one another whose respective measuring technology sensitivity is set differently from one another.

4. The production facility according to claim 1 or 2 or 3, **characterized in that** the respective measuring technology sensitivity is configured respectively as a relation between a quantity to be measured and a measuring signal corresponding with the respective quantity to be measured, wherein the quantity to be measured is a color density or a color value or a sharpness and the measuring signal corresponding with the respective quantity to be measured is a measured value displayed on a scale or an electrical voltage.

5. The production facility according to claim 1 or 2 or 3 or 4, **characterized in that** the inspection system (13) is arranged at the end of the transport path of the relevant printed sheet (02) guided by the production facility.

6. A method for setting a measuring technology sensitivity of an inspection system having a plurality of detection regions, wherein this method is carried out in a production facility having a printing press or on a measuring table, in which case a printed page (02) having a plurality of regions to be printed is jointly inspected with the plurality of the detection regions (17; 18; 19; 21), in which case at least two of these regions of the printed sheet (02) are printed before their respective inspection, in which case a first printed region of the printed sheet (02) is inspected with a first detection region (17) of the inspection system (13) and a second printed region of the same printed sheet (02) is inspected with a second detection region (18) of this inspection system (13), in which case a first measuring technology sensitivity is set for the first detection region (17) and a second measuring technology sensitivity is set for the second detection region (18) in or on the inspection system (13), wherein the first measuring technology sensitivity and the second measuring technology sensitivity are set so as to be different from one another, wherein the first measurement technology sensitivity and the second measurement technology sensitivity are set in each case manually by means of an operating element or automatically by way of a program, in which case respectively an advance sheet deviating from a production sheet used for the production of an end product is used as the printing sheet (02) in a set-up phase of the production facility or of the measuring table, **characterized in that** the first region of the printed sheet (02) to be inspected is printed in a steel table printing process and that the second region of the printed sheet (02) to be inspected is printed in an offset printing process or in a screen printing process or in a printing process without printing forms, wherein the region of the advance sheet printed in the set-up phase of the production facility is printed without wiping in the steel table printing process, in which case the region of the advance sheet printed in the steel table printing process is detected by one of the detection regions (17) of the inspection system (13) and this detection region (17) is defined in the inspection system (13) as its first detection region (17) for the inspection of at least one first region printed on a production sheet subsequently used for production of the end product in the steel table printing process.

7. The method according to claim 6, **characterized in that** in the first region of the relevant sheet (02) printed in the steel table printing process at least one partial region is configured to be blurry at least in its contour.

8. The method according to claim 7, **characterized in that** the at least one blurry contour is respectively configured as a sharp contour after its detection by at least one imaging operation used in the inspection system (13).

## Revendications

1. Installation de production avec une machine à imprimer avec un système d'inspection (13) avec plusieurs zones de détection (17 ; 18 ; 19 ; 21), dans laquelle plusieurs de ces zones de détection (17 ; 18 ; 19 ; 21) du système d'inspection (13) sont disposées de manière à inspecter conjointement une feuille d'impression (02) présentant plusieurs zones imprimées, dans laquelle une première zone de détection (17) est disposée de manière à inspecter une première zone imprimée de la feuille d'impression (02), et une deuxième zone de détection (18), une deuxième zone imprimée de la même feuille d'impression (02), dans laquelle, dans le système d'inspection (13), une première sensibilité métrologique est ajustée pour la première zone de détection (17), et une deuxième sensibilité métrologique, pour la deuxième zone de détection (18), dans laquelle la première sensibilité métrologique et la deuxième sensibilité métrologique sont ajustées de manière à différer l'une de l'autre, dans laquelle la première sensibilité métrologique et la deuxième sensibilité métrologique sont ajustées respectivement manuellement au moyen d'un élément de commande ou automatiquement par un programme, dans laquelle la machine à imprimer de l'installation de production présente plusieurs groupes d'impression, dans laquelle au moins deux de ces groupes d'impression sont disposés de manière à imprimer une même feuille d'impression, **caractérisée en ce que** parmi ces groupes d'impression imprimant la même feuille d'impression (02), l'un est réalisé sous la forme d'un groupe d'impression imprimant la feuille d'impression concernée au cours d'un procédé d'impression sur plaque d'acier et un autre groupe d'impression en tant que groupe d'impression imprimant la feuille d'impression (02) concernée au cours d'un procédé offset ou au cours d'un procédé de sérigraphie ou au cours d'un procédé d'impression sans cliché, dans laquelle une zone, imprimée sans essuyage au cours du procédé d'impression sur plaque d'acier, d'une feuille de passe utilisée dans une phase de réglage de la machine à imprimer, est détectée par une des zones de détection (17) du système d'inspection (13) et établie dans le système d'inspection (13) en tant que première zone de détection (17) de celui-ci pour l'inspection d'au moins une première zone imprimée au cours du procédé d'impression sur plaque d'acier sur une feuille de production utilisée ensuite pour produire le produit fini.

2. Installation de production selon la revendication 1, **caractérisée en ce que**, pour la première zone de détection (17) inspectant la première zone imprimée de la feuille d'impression (02), une sensibilité métrologique supérieure par rapport à la deuxième zone de détection (18) inspectant la deuxième zone imprimée de la feuille d'impression (02) est ajustée.

3. Installation de production selon la revendication 1 ou 2, **caractérisée en ce qu'**une caméra (14) détectant la feuille d'impression (02) est prévue, dans laquelle la caméra (14) est reliée à une unité d'évaluation (16), dans laquelle la caméra (14) conduit les données d'image numérique générées à partir de la détection de la feuille d'impression (02) à l'unité d'évaluation (16), dans laquelle l'unité d'évaluation (16) analyse et évalue ces données d'image dans au moins deux zones de détection (17 ; 18 ; 19 ; 21) différentes l'une de l'autre, dont la sensibilité métrologique respective est ajustée de manière différente l'une de l'autre.

4. Installation de production selon la revendication 1 ou 2 ou 3, **caractérisée en ce que** la sensibilité métrologique respective est réalisée respectivement sous la forme d'une relation entre une grandeur à mesurer et un signal de mesure correspondant à la grandeur respective à mesurer, dans laquelle la grandeur à mesurer est une densité de couleur ou une valeur de couleur ou une netteté et le signal de mesure correspondant à la grandeur respective à mesurer est une valeur de mesure indiquée sur une échelle ou une tension électrique.

5. Installation de production selon la revendication 1 ou 2 ou 3 ou 4, **caractérisée en ce que** le système d'inspection (13) est disposé à la fin du trajet de transport de la feuille d'impression (02) concernée guidée à travers l'installation de production.

6. Procédé d'ajustement d'une sensibilité métrologique d'un système d'inspection présentant plusieurs zones de détection, dans lequel ce procédé est réalisé dans une installation de production avec une machine à imprimer ou sur une table de mesure, où une feuille d'impression (02) présentant plusieurs zones à imprimer est inspectée conjointement avec plusieurs des zones de détection (17 ; 18 ; 19 ; 21), où au moins deux de ces zones de la feuille d'impression (02) sont imprimées avant leur inspection respective, où une première zone imprimée de la feuille d'impression (02) est inspectée avec une première zone de détection (17) du système d'inspection (13), et une deuxième zone imprimée de la même feuille d'impression (02), avec une deuxième zone de détection (18) de ce système d'inspection (13), où, dans ou sur le système d'inspection (13), une première sensibilité métrologique est ajustée pour la première zone de détection (17), et une deuxième sensibilité métrologique, pour la deuxième zone de détection (18), dans lequel la première sensibilité métrologique et la deuxième sensibilité métrologique sont ajustées de telle sorte qu'elles diffèrent l'une de l'autre, dans lequel la première sensibilité métrologique et la deuxième sensibilité métrologique sont ajustées respectivement manuellement au moyen d'un élément de commande ou automatiquement par un programme, où une feuille de passe différente d'une feuille de production utilisée pour la production d'un produit fini est utilisée en tant que feuille d'impression (02) respectivement dans une phase de réglage de l'installation de production ou de la table de mesure, **caractérisée en ce que** la première zone à inspecter de la feuille d'impression (02) est imprimée au cours d'un procédé d'impression sur plaque d'acier et que la deuxième zone à inspecter de la feuille d'impression (02) est imprimée au cours d'un procédé offset ou au cours d'un procédé de sérigraphie ou au cours d'un procédé d'impression sans cliché, dans lequel la zone imprimée au cours du procédé d'impression sur plaque d'acier dans la phase de réglage de l'installation de production est imprimée sans essuyage, où la zone, imprimée au cours du procédé d'impression sur plaque d'acier, de la feuille de passe est détectée par une des zones de détection (17) du système d'inspection (13) et cette zone de détection (17) est établie dans le système d'inspection (13) en tant que première zone de détection (17) de celui-ci pour l'inspection d'au moins une première zone imprimée au cours du procédé d'impression sur plaque d'acier sur une feuille de production utilisée ensuite pour produire le produit fini.

7. Procédé selon la revendication 6, **caractérisé en ce qu'**au moins une zone partielle est réalisée de façon floue au moins dans son contour dans la première zone, imprimée au cours du procédé d'impression sur plaque d'acier, de la feuille d'impression (02) concernée.

8. Procédé selon la revendication 7, **caractérisé en ce que** le au moins un contour flou, après sa détection, est réalisé respectivement sous la forme d'un contour flou par au moins une opération d'image utilisée dans le système d'inspection (13).
